(19) Europäisches Patentamt
European Patent Office
Office européen des brevets

(11) EP 0 621 817 B1

(12) **EUROPEAN PATENT SPECIFICATION**

(45) Date of publication and mention
of the grant of the patent:
**04.06.1997 Bulletin 1997/23**

(21) Application number: **92924861.5**

(22) Date of filing: **27.11.1992**

(51) Int. Cl.$^6$: **B23K 26/14**

(86) International application number:
**PCT/IT92/00151**

(87) International publication number:
**WO 93/10937 (10.06.1993 Gazette 1993/14)**

(54) **METHOD AND DEVICE FOR GAS SHIELDING LASER PROCESSED WORKPIECES**

VERFAHREN UND VORRICHTUNG ZUM ABSCHIRMEN VON EINEM MIT EINEM LASER BEARBEITETES WERKSTUECK MIT GAS

PROCEDE ET DISPOSITIF DE FORMATION D'UNE ENVELOPPE DE GAZ PROTECTEUR POUR PIECES USINEES AU LASER

(84) Designated Contracting States:
**CH DE FR GB IT LI SE**

(30) Priority: **29.11.1991 IT TO910933**

(43) Date of publication of application:
**02.11.1994 Bulletin 1994/44**

(73) Proprietor: **LARA CONSULTANTS S.R.L.**
**I-10020 Moncalieri (IT)**

(72) Inventor: **LA ROCCA, Aldo, Vittorio**
**I-10020 Moncalieri (IT)**

(74) Representative: **KUHNEN, WACKER & PARTNER**
**Alois-Steinecker-Strasse 22**
**85354 Freising (DE)**

(56) References cited:
**FR-A- 2 165 916**          **FR-A- 2 360 376**
**GB-A- 2 045 141**          **US-A- 4 000 392**

## Description

TECHNICAL FIELD.

The present invention relates to a method and device for gas shielding laser processed workpieces, e.g. laser welded metal parts.

BACKGROUND ART

Some laser processes, such as welding, require an inert gas atmosphere, such as helium, argon, etc., about the area subjected to the laser beam, to prevent a chemical reaction of the material caused by the combined action of heat and atmospheric gases, of which oxygen is the most reactive.

In certain cases in which the material is not negatively affected by nitriding, dry nitrogen may also be used successfully.

On known devices for feeding such gas over the workpieces, the laser beam is directed and focused inside a conical nozzle together with a jet of inert shielding gas, usually with no separation of the two, and the inert gas is directed freely on to the work area.

Devices of the aforementioned type present numerous drawbacks. One of these is that the gas remains contacting a frequently excessive portion of the laser beam over what is usually an excessive length of time. In this respect, it is important to bear in mind that a gaseous mixture is heated by a laser beam in proportion to its capacity to absorb radiation at the laser beam wave length; in proportion to the length of time it is subjected to such radiation; and in inverse proportion to its heat capacity. The first undesired effect of such heating is that it results in an irregular alteration of the refraction coefficient of the gas, thus distorting and impairing the focus of the laser beam, which is further impaired by the convective motion produced in the heated mixture.

Should heating persist long enough for the gas to reach first the thermal excitation and then the thermal ionization threshold, this results in highly dissipative phenomena, which absorb the energy of the laser beam. In extreme cases of almost total or predominant ionization, the energy of the beam may be almost totally absorbed by the gas, thus giving rise to what is known as "blanketing", whereby the laser beam is practically prevented from reaching the workpiece.

The shielding gas must therefore present a definite number of properties:

1) low radiation absorption coefficient at the laser beam wave length;
2) high heat capacity;
3) high thermal ionization threshold or ionization potential;
4) minimum interaction or transit time (the length of time it is subjected to the laser beam);
5) for shielding against thermochemical reactions, the gas must be immune to such reactions. For this, noble gases are preferred, especially helium (He), the ionization potential and heat capacity of which are among the highest, and which also presents a low absorption coefficient of the most commonly used industrial laser beams.

In view of the above considerations, the most logical choice is helium, providing it is economically feasible, especially in Europe.

Another possibility is argon. In addition, however, to a higher radiation absorption coefficient at the wave lengths commonly used in industry, this also presents a low heat capacity and ionization potential as compared with helium. These drawbacks, however, may be overcome by proportionally reducing the interaction time, and by appropriate streamlining of the shielding gas jet.

Moreover, as ionization is predominantly thermal and, as such, governed by Saha's law, steps may also be taken to increase the pressure and reduce the temperature of the gas jet in the laser beam crossover region.

One of the major objectives involved, therefore, is that of achieving a uniform gas jet, the properties of which remain unchanged throughout its crossing of the laser beam, i.e. uniform refraction and parallel motion, no convective motion or excitation, and no ionization.

Moreover, the jet must present a poor thermophotochemical reaction with the shielded material. (Hence, no water, oxygen, hydrocarbons, acids, salts, alkalis, etc.).

The impact of the shielding gas, in the form of plasma, on the surface of the workpiece has been found to cause a considerable thermal alteration of the surface, accompanied by vapourization of a layer of material on either side of the weld bead. In particular, in cases where the gas jet is used firstly for cooling a lens, and is then directed, together with and penetrating the length of the laser beam, into a conical nozzle, the issuing jet is substantially ionized. What is more, being directed perpendicularly to the surface of the workpiece, upon impact, the jet not only reaches the high temperatures and pressures corresponding to impact velocity 0 (zero), but is also forced to restore the ionization energy by recombining it.

By combining these effects (high Po, high To) plus the enthalpic values corresponding to restoration of the ionization energy, i.e.

$$Po + \Delta P >> Po \text{ and } To + \Delta T >> To$$

it follows that the material of the workpiece vapourizes, not beneath the laser beam, but at the edge where it is struck by the plasma jet.

Another point to note is that the high reflectivity of a metal surface at low temperature (practically until it becomes red hot) almost doubles the intensity of the laser beam on impact, thus resulting in ionization despite the low value of the incident laser beam.

This is further assisted by gas, free radicals and other adsorbed chemically active substances, which emit nonthermionic free electrons resulting in avalanching, and, if serious enough, even in blanketing, i.e. an unpredictable (catastrophic) increase in ionization at incident laser beam level, which prevents transmission of the beam on to the workpiece.

Ionization is always accentuated by, and very often in fact due to, the surface of the workpiece, which is inevitably reflective at low temperature, and therefore reflects part of the energy of the laser beam back towards the inert gas atmosphere, thus roughly doubling the intensity of the radiant energy field in the area close to the work surface.

If, on the other hand, the inert gas jet is directed on to the work surface together with the laser beam, it presents a high degree of ionization on impact with the workpiece, and, on bouncing back off the work surface, tends to mix with the atmosphere, thus reducing shielding efficiency. Moreover, ionization energy is taken from the laser beam, which therefore presents a lower power density for a given focal spot; and the variable density of the mixture so formed results in refraction and convection phenomena impairing the focus of the laser beam, thus further reducing its intensity and efficiency.

According to the known state of the art, the jet is supplied freely, often even using conical nozzles. Consequently, when supply pressure increases over and above a critical ratio value (corresponding to sonic velocity at the cone outlet, and characterised by an (outlet pressure)/(stagnation pressure) value of <0.528 for biatomic gases such as air, nitrogen, oxygen, carbon monoxide, etc.), the jet, for lack of a stable law of motion, oscillates violently in direction (wobble) and axial velocity (pulsation). These effects amplify those caused by air mix and drag, and by possible laminar or turbulent boundary layers established inside the nozzle and affecting uniform outflow. In view of the size and distance of commonly used nozzles from the work surface, this combined alteration in outflow, due to the internal and, even more so, external aerodynamic factors involved (boundary layer, air mix and drag), is even more serious in the event oscillation (wobble, pulsation) is amplified by attempts to increase outflow velocity by increasing supply pressure. In the case of normal size subsonic nozzles, the instability caused by exceeding the critical pressure frequently results in such severe oscillation that the laser beam impact area is substantially uncovered, thus impairing shielding by the gas, which may be replaced by varying mixtures of air and gas. These alternate over the impact point of the laser beam, which is thus swept by a pulsating jet in which the percentage of shielding gas may vary enormously and in a random manner characteristic of this type of non-stationary phenomenon.

Reliable control of a freely directed jet requires the use of supersonic nozzles, which, with a given configuration and pressure ratio (obviously, for a given type of gas or mixture), provide for a uniform jet. If the pressure ratio is other than nominal, however, this results in the formation, at the outlet, of what is known as Prandlt diamonds and Mach disks. Freely directed supersonic jets nevertheless provide for a better distribution of the field parameters (velocity, density, pressure, temperature), and, though subject to the above internal and external aerodynamic factors (boundary layers, air mix and drag), these are less marked and controllable.

In this case also, scale effects, expressed in Reynolds, Prandlt, Nusselt numbers, etc., must obviously be taken into account. The capacities, distances and sizes used in laser applications may result in field irregularities (the properties of the jet in terms of its parameters, including the incorporation of outside air) possibly affecting shielding efficiency in the laser beam-work surface impact area. Nevertheless, supersonic nozzles provide for achieving velocities and pressures otherwise unattainable using subsonic nozzles.

The latter, very often, are not only badly designed, but also employed with no regard whatsoever to the basic laws of aerodynamics.

Consequently, when the stagnation pressure of a freely directed jet, particularly a subsonic jet, is increased with a view to increasing crossover speed, ambient gas drag efficiency, and also surface pressure, for improving shielding efficiency, this more often than not results in uncontrollable situations the effects of which are quite the opposite to those expected. The commonest include uncontrolled ionization resulting in "nailheads" (irregular weld bead); vapourization and sublimation of the surface material, which often presents grooves on either side of the weld bead; and an irregular metallurgical structure, which often presents a central zone, and two surrounding zones reasonably attributable to the plasma jets on either side of the laser beam responsible for the central zone. This differs widely from the two surrounding zones, though all three are irregular. Structural and geometric irregularity clearly indicates, among other things:

a) undesired, totally irregular stress;
b) severe distortion;
c) poor process efficiency;
d) poor process repeatability;
e) unsatisfactory correlation with available models.

The above introduction clearly indicates, therefore, the importance of correct utilization of the shielding gas, for improving the process in terms of efficiency, quality and repeatability.

Correct usage will also provide for a better correlation of the data involved, thus enabling a better understanding of the phenomenon and its control parameters, and more straightforward, effective models for predicting, achieving and maintaining the required results.

GB-A-2 045 141 discloses a method and apparatus for the control of shielding gas according to the preamble of claims 1 and 7, respectively, wherein a jet of shielding gas is directed from a nozzle across the worpiece surface and recirculated to the nozzle along a ducting, of which the nozzle defines an output.

The input of the circulation duct is spaced apart with respect to the nozzle, the shielding gas being therefore not guided within solid walls in the area of interaction with the laser beam and not separated from the ambient air. Even if the circulation duct is so well designed as to theoretically remove all the shielding gas ejected by the nozzle, severe heating by laser beam in the interaction area, where a free boundary layer between such gas and ambient air exists, causes the flow to become inevitably unsteady, and the shielding gas to be mixed with ambient air, thus producing the drawbacks previously discussed, that is: recirculation and thereby long residence time resulting in heating and ionization of the easily ionizable gas mixture.

FR-A-2 360 376 discloses a gas shielding apparatus wherein the shielding gas is fed to a cavity surrounding the welding area through a narrow passage. With this geometrical arrangement, supercritical flow conditions are easily reached; oscillations in flow speed and direction at the outlet of the passage are to be expected, and outflow irregularities are further amplified by laser heating, so that a random gas recirculation at low average speed in the cavity is established, which leads to gas ionization and laser beam defocusing.

It is an object of the present invention to provide a straightforward, reliable gas shielding method and device designed to overcome the aforementioned drawbacks.

## DISCLOSURE OF INVENTION

According to the present invention, there is provided a method of gas shielding laser processed workpieces, whereby a laser beam is directed in a substantially perpendicular direction on to a portion of a work surface and a jet of shielding gas is fed on to said surface portion along a conduit defined by solid walls, so as to flow over said surface crosswise in relation to said beam, characterised in that said conduit has a laser beam inlet aperture having the minimum area compatible with the passage of said laser beam and a laser beam outlet aperture facing said surface portion, said conduit having a streamlined shape for causing the gas flow to be stationary, said jet of shiedling gas being supplied at such a speed as to eliminate the existing ambient gas, and minimise the physical, dynamic and chemical effects of said laser beam on said gas, which thus acts substantially as an inert gas.

Also provided is a device for gas shielding laser processed workpieces according to the method claimed in the foregoing claims, comprising means for directing said laser beam on to said surface portion; said device comprising means for storing said shielding gas; and means for supplying said gas from said storage means; said supply means comprise at least one conduit defined by solid walls and designed to supply a jet of said gas at said speed; said conduit being located so as to direct said jet on to said surface crosswise in relation to said laser beam; characterised in that said conduit has a laser beam inlet aperture having the minimum area compatible with the passage of said laser beam and a laser beam outlet aperture facing said surface portion, said conduit having a streamlined shape for causing the gas flow to be stationary, said jet of shielding gas being supplied at such a speed as to eliminate the existing ambient gas, and minimise the physical, dynamic and chemical effects of said laser beam on said gas, which thus acts substantially as an inert gas.

## BRIEF DESCRIPTION OF DRAWINGS

A number of preferred, non-limiting embodiments of the present invention will be described by way of example with reference to the accompanying drawings, in which:

Fig.1 shows a diagram of the gas shielding method according to the present invention, as applied to a laser process;

Fig.2 shows a schematic section of a shielding gas supply device in accordance with a first embodiment of the present invention;

Fig.3 shows a schematic section of a variation of the Fig.2 device;

Fig.4 shows a schematic section of a supply device in accordance with a further embodiment of the present invention;

Fig.5 shows a section along line V-V in Fig.4;

Fig.6 shows a section along line VI-VI in Fig.5;

Fig.7 shows a schematic section of a supply device in accordance with a further embodiment of the present invention;

Fig.8 shows a section along line VIII-VIII in Fig.7;

Fig.9 shows a schematic section of a further variation of the Fig.2 device.

## BEST MODE FOR CARRYING OUT THE INVENTION

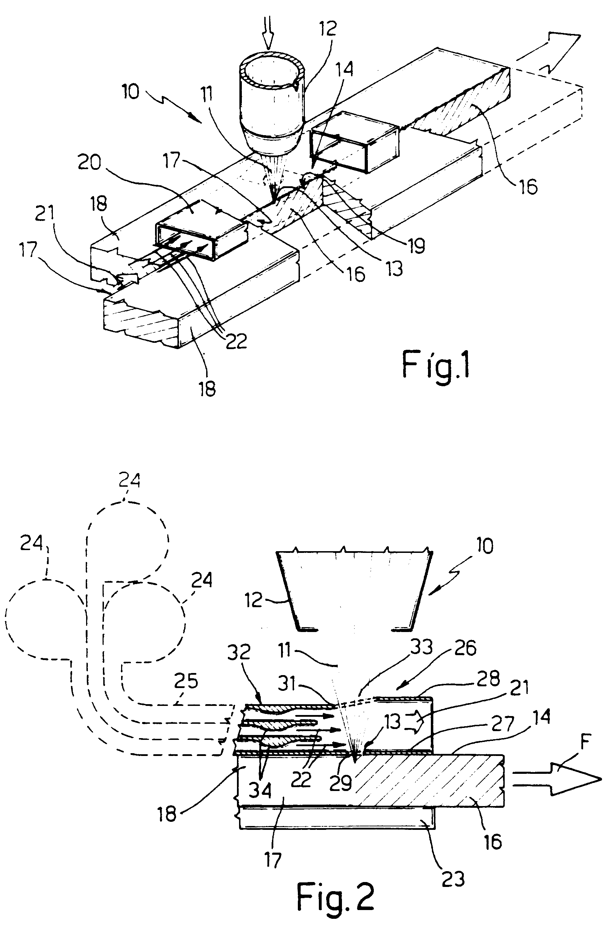

Number 10 in Fig.1 indicates a laser apparatus substantially comprising a source for emitting a laser beam 11 issuing from a laser head 12 and collimated on to a portion 13 of a work surface 14. In particular, apparatus 10 provides for effecting a weld 16 between two facing surfaces 17 of two metal workpieces 18, and producing a weld bead 19 on surface 14.

The method according to the present invention provides for supplying, via a conduit 20 defined by rigid walls, an inert or any appropriate shielding gas over portion 13 of surface 14 subjected to laser beam 11, so as to prevent atmospheric air contacting portion 13 during the welding process. The gas jet 21 is supplied over portion 13 of surface 14 crosswise in relation to the direction of beam 11, and at high, preferably supersonic, speed for substantially preventing the shielding gas from being affected by beam 11.

The conduit 20 is continuous and has a streamlined shape for causing the gas flow to be substantially stationary; the velocity of the flow is predetermined in such a way as to minimise the physical, dynamic and chemical effects of the laser beam 11 on the gas, which thus acts substantially as an inert gas. As a consequence, parameters such as pressure, velocity, refraction index of the gas upstream and downstream the laser beam are substantially the same.

The gas travels and is supplied in the same direction as the workpiece to remove the atmospheric air; supply fresh shielding gas over portion 13 as this moves beneath beam 11; and maintain the gas shield for some time after welding, and after both the weld and workpiece have cooled.

For maintaining constant efficiency over the entire thickness of jet 21, this may consist of a number of elementary currents 22 varying in speed according to the height of current 22 in relation to the conduit face adjacent to the work surface. As the speed of the gas over the surface portion subjected to the laser beam must be directly proportional to the power of the beam, which, due to focusing, increases as the beam gets closer to portion 13, the speed of currents 22 preferably decreases upwards.

In the Fig.2 embodiment, welding apparatus 10 comprises handling means, indicated schematically by 23, for moving workpieces 18 in relation to laser beam head 12; and the gas supply device comprises a gas tank 24, and a closed, solid-walled conduit 25 having a substantially rectangular-section portion 26 located over surface portion 13. To vary the heat content of elementary gas currents 22, both tank 24 and currents 22 may be separated by solid walls along the entire path of the gas, to produce a number of parallel gas circuits, in which both the stagnation parameters (pressure, temperature) and the characteristics of the gas itself (molecular weight, specific heat ratio, etc.) may be determined as required, and even differ from one circuit to another.

Portion 26 comprises a first wall 27 mating with, in this case, flat work surface 14; a wall 28 opposite wall 27; and slides over surface 14 of workpieces 18 as these are moved along by handling means 23. Portion 26 also presents an opening consisting of two holes 29, 31 in respective walls 27, 28, for the passage of beam 11 on to surface portion 13. The area (or, in the case of a circular beam, the diameter) of hole 31 is the smallest compatible with the passage of beam 11. As beam 11 is conical, for collimating it on to portion 13, the diameter of hole 29 is smaller than that of hole 31, but conveniently larger than the impact section of the beam, so as to accommodate the portion of the material of workpieces 18 liquefied by beam 11 and forming weld bead 19. The same also applies to beams of other, e.g. rectangular or square, sections.

Portion 26 presents a rectangular cross section, the width and height of which conveniently range respectively from 4 to 10 and 3 to 6 times the diameter of hole 29.

Upstream from holes 29 and 31, portion 26 presents gas accelerating means, e.g. nozzle means 32, for bringing jet 21 up to supersonic speed. To enable the gas, heated by the laser beam, to expand downstream from portion 13, hole 31 is located in a sloping portion 33 of wall 28, so that portion 26 presents a larger section downstream from holes 29, 31. This section must be further increased to accommodate the weld bead section downstream from hole 29, as well as any aerodynamic bodies inside the conduit.

The streamlined shape of portion 26 allows the gas flow to be substantially stationary. Flow parameters such as pressure and velocity remain substantially unchanged through the laser beam, and the optical properties of the gas are thus substantially uneffected.

According to a first embodiment, nozzle means 32 comprise a number of elementary nozzles 34 for producing respective elementary gas currents 22 at different levels in relation to portion 13, and designed to produce, in respective currents 22, speeds decreasing upwards according to the level of currents 22. The heat content and the nature of the gas in each current 22 may also differ, to enable other parameters, such as density, specific heat, absorption and ionization potential, to be so selected as to produce a gas having homogeneous optical properties, and which is totally unaffected, chemically and physically, by the variable-intensity laser beam, and throughout the welding process. In other words, the shielding gas, which plays no part in the actual process, acts as an aerodynamic window, which is totally transparent to the laser beam and inert in relation to the welding process.

During welding, jet 21 flows over portion 13 of work surface 14 perpendicularly to laser beam 11, thus providing for effective, constant shielding of portion 13, while beam 11 is directed through hole 31, jet 21, and hole 29 on to portion 13 for welding surfaces 17 of workpieces 18. The supersonic speed of jet 21 provides for minimum contact between the shielding gas and beam 11, so as to substantially prevent any physical or chemical change in the gas, such as density, refraction coefficient and speed, thus also eliminating convective motion, excitation or ionization of the gas.

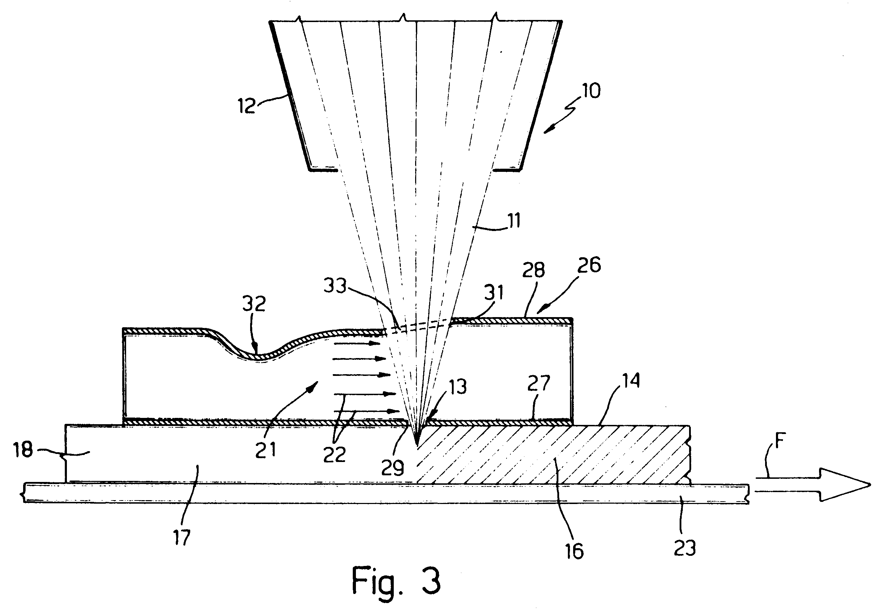

In the Fig.3 variation, nozzle means 32 are formed by so shaping wall 28 of portion 26 as to produce, in known manner, a variable-speed gas jet 21 (multi-Mach nozzle).

In particular, wall 28 may be so shaped as to produce a number of elementary gas currents 22 decreasing upwards in speed, at the beam crossover point, in relation to the distance between current 22 and wall 27 and, therefore, surface portion 13. In a further, simplified, solution, the nozzle may provide for one supersonic speed, providing this is sufficient for achieving the objectives described above, i.e. a jet capable of withstanding the maximum power of the beam without incurring drawbacks in the low-power regions. Such drawbacks may even be purely economical, such as a waste of gas, by supplying it at a higher speed than necessary over the low-power regions of the beam. The simplicity of the design and the wider margin of safety this provides for, however, may compensate for the increase in running cost.

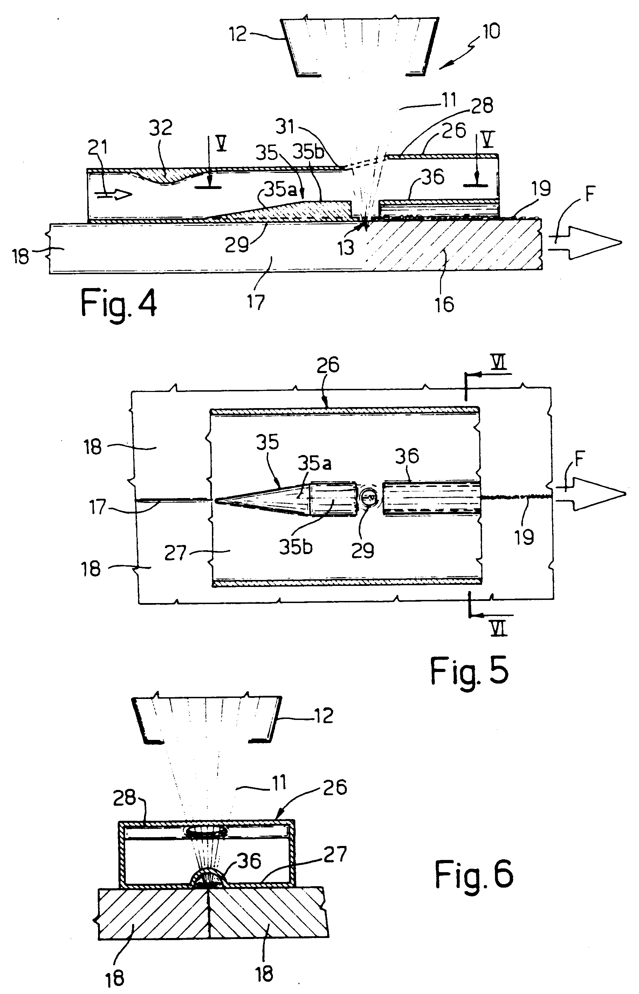

In the Fig.4, 5 and 6 embodiment, wall 27 defines, upstream from hole 29, a suitably streamlined body 35 having its longer axis aligned with the flow direction of the gas, for protecting the formation of the weld bead commencing at portion 13. As the formation of the molten metal from which weld bead 19 is formed is accompanied by thermo-fluid-dynamic pulsations, body 35 provides for:

a) protecting the molten metal from impact and, consequently, expulsion or erosion by the gas jet;
b) preventing the thermodynamic pulsations of the molten metal from involving a portion of the jet larger than the section of the body, thus providing for aerodynamic shielding.

Body 35 consists of a half cone 35a, the maximum end section of which continues into a half cylinder 35b of the same section, which is slightly larger than that of weld bead 19. The length of half cylinder 35b and half cone 35a is respectively 3-4 and 6-7 times the diameter of hole 29.

To protect the bead, during welding and until it has hardened, from erosion by the gas, a hollow half cylinder 36 of the same diameter as half cylinder 35b is located downstream from hole 29 and coaxially with body 35.

A sufficient, albeit weaker, stream of shielding gas penetrates half cylinder 36 for continued shielding of the bead as it hardens.

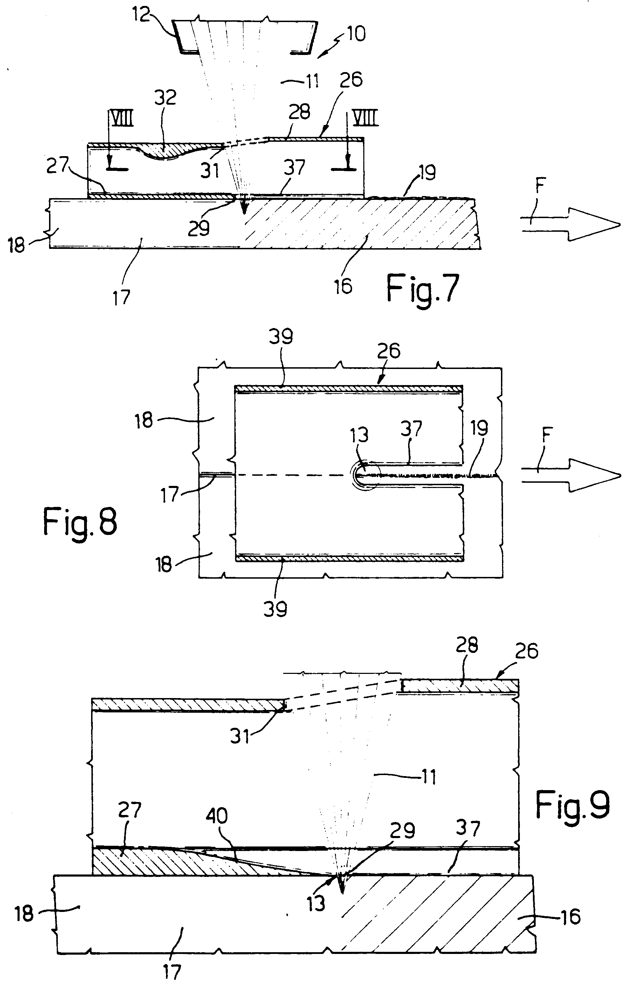

In the Fig.7 and 8 embodiment, formation of the weld bead is protected by the thickness of wall 27, which is comparable to the height of the bead, and wall 27 presents a slot 37 originating downstream from hole 29 and extending along the entire length of wall 27.

In cases where appearance takes precedence over structural/mechanical performance, a flat, smooth weld is preferred, both of which characteristics are obtainable by appropriately streamlining portion 26 of conduit 20, both up- and downstream from hole 29, and by varying the parameters of the gas jet.

In Fig.9, for example, removal of bead 19 is achieved by appropriately streamlining wall 27 upstream from hole 29. In this case, wall 27 presents a groove 40 having its main axis in the gas flow direction, and so designed as to cause part of supersonic jet 21 to flow tangentially over the workpiece portion immediately upstream from hole 29. Downstream from hole 29, groove 40 continues in the form of slot 37 up to the end of wall 27.

Groove 40 thus causes the jet to flow over the work surface, commencing upstream and continuing downstream from hole 29. Both up- and downstream from hole 29, the thermo-fluid-dynamic properties of the supersonic jet are so exploited as to distribute the action of the gas on the molten material throughout the liquefaction and subsequent hardening stages.

The advantages of the method and device according to the present invention will be clear from the foregoing description. In particular, the solid wall of the conduit directing shielding gas jet 21 on to surface portion 13 subjected to laser beam 11 prevents the gas from mixing with atmospheric air. Also, the direction and high speed of jet 21 minimises the effect of beam 11 on the inert gas, by preventing chemical and physical changes, such as a variation in density and temperature, in turn affecting the refraction index of the gas, and resulting in convective motion seriously impairing the focus and, consequently, the power and efficiency of the laser beam.

Similarly, the present invention provides for totally eliminating excitation and ionization phenomena absorbing and seriously impairing the power of the beam.

These effects, combined with the defocusing mentioned above, may, in extreme cases, so impair the power and efficiency of the beam as to result in blanketing, whereby most of the energy of the beam is prevented from reaching the workpiece, and is dissipated in the gases adjacent to the work surface.

The method and device according to the present invention also overcome the drawbacks currently posed by a larger portion of the impaired energy reaching the work surface, but in other forms, thus resulting in irregular weld beads; multiple stress states accompanied by an irregular metallurgical structure; inferior quality welds requiring greater energy; reduced output; and higher investment and running cost.

**Claims**

1. A method of gas shielding laser processed workpieces (18), whereby a laser beam (11) is directed in a substantially perpendicular direction on to a portion (13) of a work surface (14) and a jet (21) of shielding gas is fed on to said surface portion (13) along a conduit (20, 25) defined by solid walls, so as to flow over said surface (14) crosswise in relation to said beam (11), characterised in that said conduit has a laser beam inlet aperture (31) having the minimum area compatible with the passage of said laser beam (11) and a laser beam outlet aperture (29) facing said surface portion (13), said conduit (20, 25) having a streamlined shape for causing the gas flow to be stationary, said jet (21) of shiedling gas being supplied at such a speed as to eliminate the existing ambient gas, and minimise the physical, dynamic and chemical effects of said laser beam (11) on said gas, which thus acts substantially as an inert gas.

2. A method as claimed in claim 1, characterised in that the velocity of said gas is predetermined in each section of said laser beam (11) for minimising said effects of said laser beam (11) on said gas.

3. A method as claimed in claim 1 or 2, characterised by the fact that said gas jet (21) is supplied at supersonic speed.

4. A method as claimed in Claim 3, characterised by the fact that said gas jet (21) is supplied in the form of a number of parallel, elementary currents (22), the speed of which decreases alongside an increase in the height of said current (22) in relation to said surface (14).

5. A method as claimed in Claim 4, characterised by the fact that said elementary currents are supplied by complete, independent, parallel circuits; each circuit having a respective tank, and being designed to supply a gas or gas mixture having different properties (molecular weight and structure, specific heat ratio, etc.) and different enthalpic and stagnation conditions (total temperature and pressure).

6. A method as claimed in one of the foregoing Claims, wherein said process consists in the welding of two metal workpieces (18), characterised by the fact that said jet (21) of shielding gas is supplied in the same direction as that in which said workpieces (18) travel in relation to said laser beam (11).

7. A device for gas shielding laser processed workpieces according to the method claimed in the foregoing claims, comprising means (12) for directing said laser beam (11) on to said surface portion (13); said device comprising means (24) for storing said shielding gas; and means (25) for supplying said gas from said storage means (24); said supply means (25) comprise at least one conduit (26) defined by solid walls and designed to supply a jet (21) of said gas at said speed; said conduit (26) being located so as to direct said jet (21) on to said surface (14) crosswise in relation to said laser beam (11); characterised in that said conduit (20, 25) has a laser beam inlet aperture (31) having the minimum area compatible with the passage of said laser beam (11) and a laser beam outlet aperture (29) facing said surface portion (13), said conduit (20, 25) having a streamlined shape for causing the gas flow to be stationary, said jet (21) of shielding gas being supplied at such a speed as to eliminate the existing ambient gas, and minimise the physical, dynamic and chemical effects of said laser beam (11) on said gas, which thus acts substantially as an inert gas.

8. A device as claimed in Claim 7, characterised by the fact that said conduit (25) presents a bottom wall (27) having a surface resting on said surface (14) of said workpiece (18) and a top wall (28) opposite said bottom wall (27), said laser beam outlet aperture (29) being formed in said bottom wall (27), said laser beam inlet aperture (31) being formed in said top wall (28).

9. A device as claimed in Claim 7 or 8, characterised by the fact that said outlet aperture (29) has an area such as to accommodate the liquefied material of said workpiece (18) subjected to said laser beam (11).

10. A device as claimed in any of the foregoing Claims from 7 to 9, wherein said work surface (14) is substantially flat; characterised by the fact that said conduit (25) presents a substantially rectangular section.

11. A device as claimed in Claim 10, characterised by the fact that the width of said rectangular section ranges from 4 to 10 times the diameter of said outlet aperture (29), and the height of said rectangular section ranges from 3 to 6 times the diameter of outlet aperture (29).

12. A device as claimed in one of the foregoing Claims from 7 to 11, characterised by the fact that said conduit (25) comprises nozzle means (32) for producing a supersonic gas jet (21).

13. A device as claimed in Claim 12, characterised by the fact that said nozzle means (32) produce a gas jet (21) consisting of a number of elementary gas currents (22) decreasing in speed alongside an increase in height in relation to said surface portion (13).

14. A device as claimed in Claim 13, characterised by the fact that said currents (22) produced by said nozzle means (32) are not separated physically (multi-Mach nozzle).

15. A device as claimed in Claim 14, characterised by the fact that said nozzle means (32) comprise a number of elementary nozzles (34) for producing said elementary gas currents (22).

16. A device as claimed in Claim 15, characterised by the fact that each said elementary nozzle (34) is supplied by a respective complete circuit connected to a respective tank (24).

17. A device as claimed in one of the foregoing Claims from 7 to 16, characterised by the fact that said conduit (25) presents a larger section downstream than immediately upstream from said apertures (29, 31).

18. A device as claimed in one of the foregoing Claims from 8 to 17, characterised by the fact that, upstream from said outlet aperture (29), said bottom wall (27) presents an inner groove (40) for directing said shielding gas on to said surface portion (13).

19. A device as claimed in one of the foregoing Claims from 7 to 18, wherein said apparatus (10) provides for welding two metal workpieces (18) along respective mating flat surfaces (17), and comprises means (23) for moving said workpieces (18) in relation to said apparatus (10); characterised by the fact that said conduit (25) is so arranged as to supply said gas jet (21) on to said surface portion (13) in the same direction as said means (23) supporting said workpieces (18).

20. A device as claimed in Claim 19, characterised by the fact that said conduit (25) presents means (37) for directing at least part of said jet (21) from said surface portion (13) along a bead (19) of said weld (16).

21. A device as claimed in Claim 20, characterised by the fact that said directing means comprise a slot (37) parallel to an axis of said conduit (25); said slot (37) being formed in said bottom wall (27) and extending downstream from said outlet aperture (29) along the entire length of said bottom wall (27).

22. A device as claimed in Claim 21, characterised by the fact that, upstream from said first hole (29), said bottom wall (27) presents a streamlined body (35) having its longer axis in the direction of said gas jet (21), and consisting of a half cone portion (35a) continuing into a semicylindrical portion (35b).

23. A device as claimed in Claim 22, characterised by the fact that it comprises a hollow half cylinder (36) having its longer axis in the flow direction of said gas; said half cylinder (36) forming part of said bottom wall (27) and extending downstream from said outlet aperture (29).

**Patentansprüche**

1. Ein verfahren zur Abschirmung von mit Laser bearbeiteten Werkstücken (18) mit Gas, bei dem ein Laserstrahl (11) in eine im wesentlichen senkrechte Richtung auf einen Abschnitt (13) einer Arbeitsfläche (14) gerichtet wird und ein Strahl (21) aus Abschirmgas über einen Kanal (20, 25), der durch feste Wände definiert ist, dem Flächenabschnitt (13) zugeführt wird, so daß dieser über die Fläche (14) quer zum Strahl (11) strömt,

dadurch gekennzeichnet, daß der Kanal eine Laserstrahleinlaßöffnung (31), die den minimalen Bereich aufweist, der bezüglich dem Durchgang des Laserstrahls (11) kompatibel ist, und eine Laserstrahlauslaßöffnung (29), die zum Flächenabschnitt (13) zeigt, aufweist, wobei der Kanal (20, 25) eine stromlinienförmige Gestalt hat, die bewirkt, daß die Gasströmung stationär ist, wobei der Strahl (21) aus Abschirmgas mit einer solchen Geschwindigkeit zugeführt wird, daß das vorliegende Umgebungsgas beseitigt wird und die physikalischen, dynamischen und chemischen Wirkungen des Laserstrahls (11) auf das Gas minimiert werden, das somit im wesentlichen als Inertgas wirkt.

2. Verfahren nach Anspruch 1, das dadurch gekennzeichnet ist, daß die Geschwindigkeit des Gases in jedem Abschnitt des Laserstrahls (11) vorbestimmt ist, um die Wirkungen des Laserstrahls (11) auf das Gas zu minimieren.

3. Vorfahren nach Anspruch 1 oder 2, das dadurch gekennzeichnet ist, daß der Gasstrahl (21) mit Überschallgeschwindigkeit zugeführt wird.

4. Verfahren nach Anspruch 3, das dadurch gekennzeichnet ist, daß der Gasstrahl (21) in Form von mehreren parallelen elementaren Strömen (22) zugeführt wird, deren Geschwindigkeit sich mit einer Vergrößerung der Höhe des Stromes (22) bezüglich der Fläche (14) verringert.

5. Verfahren nach Anspruch 4, das dadurch gekennzeichnet ist, daß die elementaren Ströme durch vollständige, unabhängige, parallele Kreise zugeführt werden, wobei jeder Kreis einen jeweiligen Behälter hat und so gestaltet ist, daß dieser ein Gas oder eine Gasmischung mit unterschiedlichen Eigenschaften (Molekulargewicht und Molekularstruktur, spezifisches Wärmeverhältnis, usw.) und unterschiedlichen Enthalpie- und Stauzuständen (Gesamttemperatur und Druck) zuführt.

6. Verfahren nach einem der vorhergehenden Ansprüche, bei dem der Prozeß darin besteht, daß zwei Metallwerkstücke (18) verschweißt werden, das dadurch gekennzeichnet ist, daß der Strahl (21) aus Abschirmgas in die gleiche Richtung zugeführt wird, in der sich das Werkstück (18) bezüglich dem Laserstrahl (11) bewegt.

7. Vorrichtung für die Gasabschirmung von mit Laser bearbeiteten Werkstücken nach dem Verfahren entsprechend den vorhergehenden Ansprüchen mit einer Einrichtung (12), die den Laserstrahl (11) auf den Flächenabschnitt (13) richtet, wobei die Vorrichtung eine Einrichtung (24), die das Abschirmgas speichert, und eine Einrichtung (25), die das Gas von der Speichereinrichtung (24) zuführt, aufweist, wobei die Zuführeinrichtung (25) zumindest einen Kanal (26) aufweist, der durch feste Wände definiert ist und so gestaltet ist, daß dieser einen Strahl (21) des Gases mit der Geschwindigkeit zuführt, wobei der Kanal (26) so angeordnet ist, daß der Strahl (21) quer zum Laserstrahl (11) auf die Fläche (14) gerichtet wird,

dadurch gekennzeichnet, daß

der Kanal (20, 25) einen Laserstrahleinlaßöffnung (31), die den minimalen Bereich hat, der bezüglich dem Durchgang des Laserstrahls (11) kompatibel ist, und eine Laserstrahlauslaßöffnung (29), die zum Flächenabschnitt (13) zeigt, aufweist, wobei der Kanal (20, 25) eine stromlininenförmige Gestalt hat, die bewirkt, daß die Gasströmung stationär ist, wobei der Strahl (21) aus Abschirmgas mit einer solchen Geschwindigkeit zugeführt wird, daß das vorhandene Umgebungsgas beseitigt wird und die physikalischen, dynamischen und chemischen Wirkungen des Laserstrahls (11) auf das Gas minimiert werden, das somit im wesentlichen als Inertgas wirkt.

8.  Vorrichtung nach Anspruch 7, die dadurch gekennzeichnet ist, daß der Kanal (25) eine untere Wand (27), die eine Fläche hat, die auf der Fläche (14) des Werkstücks (18) verbleibt, und eine obere Wand (28), die zur unteren Wand (27) entgegengesetzt liegt, aufweist, wobei die Laserstrahlauslaßöffnung (29) in der unteren Wand (27) ausgebildet ist und die Laserstrahleinlaßöffnung (31) in der oberen Wand (28) ausgebildet ist.

9.  Vorrichtung nach Anspruch 7 oder 8, die dadurch gekennzeichnet ist, daß die Auslaßöffnung (29) einen Bereich hat, in dem das verflüssigte Material des Werkstücks (18), das dem Laserstrahl (11) ausgesetzt wurde, untergebracht wird.

10. Vorrichtung nach einem der vorhergehenden Ansprüche 7 bis 9, wobei die Arbeitsfläche (14) im wesentlichen flach ist, die dadurch gekennzeichnet ist, daß der Kanal (25) einen im wesentlichen rechteckigen Querschnitt aufweist.

11. Vorrichtung nach Anspruch 10, die dadurch gekennzeichnet ist, daß die Breite des rechteckigen Querschnitts im Bereich von 4 bis 10 mal dem Durchmesser der Auslaßöffnung (29) liegt und die Höhe des rechteckigen Querschnitts im Bereich von 3 bis 6 mal dem Durchmesser der Auslaßöffnung (29) liegt.

12. Vorrichtung nach einem der vorhergehenden Ansprüche 7 bis 11, die dadurch gekennzeichnet ist, daß der Kanal (25) eine Düseneinrichtung (32) aufweist, die einen Überschallgasstrahl (21) erzeugt.

13. Vorrichtung nach Anspruch 12, die dadurch gekennzeichnet ist, daß die Düseneinrichtung (32) einen Gasstrahl (21) erzeugt, der aus mehreren elementaren Gasströmen (22) besteht, deren Geschwindigkeit sich mit einer Erhöhung der Höhe bezüglich dem Flächenabschnitt (13) verringert.

14. Vorrichtung nach Anspruch 13, die dadurch gekennzeichnet ist, daß die Ströme (22), die durch die Düseneinrichtung (32) erzeugt werden, nicht physikalisch getrennt sind (Multi-Mach-Düse).

15. Vorrichtung nach Anspruch 14, die dadurch gekennzeichnet ist, daß die Düseneinrichtung (32) eine Anzahl von Elementardüsen (34) zur Erzeugung der Elementargasströme (22) aufweist.

16. Vorrichtung nach Anspruch 15, die dadurch gekennzeichnet ist, daß jede Elementardüse (34) durch einen jeweiligen vollständigen Kreis gespeist wird, der mit einem jeweiligen Behälter (24) verbunden ist.

17. Vorrichtung nach einem der vorhergehenden Ansprüche 7 bis 16, die dadurch gekennzeichnet ist, daß der Kanal (25) stromabwärts einen größeren Querschnitt als unmittelbar stromaufwärts von den Öffnungen (29, 31) aufweist.

18. Vorrichtung nach einem der vorhergehenden Ansprüche 8 bis 17, die dadurch gekennzeichnet ist, daß die untere Wand (27) stromaufwärts von der Auslaßöffnung (29) eine Innennut (40) aufweist, die das Abschirmgas auf den Flächenabschnitt (13) richtet.

19. Vorrichtung nach einem der vorhergehenden Ansprüche 7 bis 18, wobei die Vorrichtung (10) dazu dient, zwei Metallwerkstücke (18) entlang jeweiliger aneinanderpassender flacher Flächen (17) zu verschweißen, und einen Einrichtung (23) aufweist, die die Werkstücke (18) bezüglich der Vorrichtung (10) bewegt,
    die dadurch gekennzeichnet ist, daß der Kanal (25) so angeordnet ist, daß dieser den Gasstrahl (21) auf den Flächenabschnitt (13) in die gleiche Richtung zuführt, in der die Einrichtung (23) das Werkstück (18) stützt.

20. Vorrichtung nach Anspruch 19, die dadurch gekennzeichnet ist, daß der Kanal (25) eine Einrichtung (37) aufweist, die zumindest einen Teil des Strahls (21) vom Flächenabschnitt (13) entlang einer Schweißraupe (19) der Schweißnaht (16) richtet.

21. Vorrichtung nach Anspruch 20, die dadurch gekennzeichnet ist, daß die Richteinrichtung einen Schlitz (37) aufweist, der parallel zu einer Achse des Kanals (25) verläuft, wobei der Schlitz (37) in der unteren Wand (27) ausgebildet ist und sich stromabwärts von der Auslaßöffnung (29) über die gesamte Länge der unteren Wand (27) erstreckt.

22. Vorrichtung nach Anspruch 21, die dadurch gekennzeichnet ist, daß die untere Wand (27) stromaufwärts vom ersten Loch (29) einen stromlinienförmigen Körper (35) aufweist, dessen längere Achse in Richtung des Gasstrahls (21) verläuft und der aus einem Halbkegelabschnitt (35a) besteht, der sich in einem Halbzylinderabschnitt (35b) fortsetzt.

23. Vorrichtung nach Anspruch 22, die dadurch gekennzeichnet ist, daß diese einen hohlen Halbzylinder (36) aufweist, dessen längere Achse in Strömungsrichtung des Gases verläuft, wobei der Halbzylinder (36) einen Teil der unteren Wand (27) bildet und sich von der Auslaßöffnung (29) aus stromabwärts erstreckt.

## Revendications

1. Procédé de protection au moyen d'un gaz de pièces traitées au laser (18), dans lequel un faisceau laser (11) est dirigé sensiblement perpendiculairement sur une partie (13) d'une surface (14) de la pièce et un jet (21) de gaz protecteur est amené sur ladite partie de surface (13) le long d'un conduit (20,25) défini par des parois solides de façon à s'écouler sur ladite surface (14) transversalement audit faisceau (11), caractérisé en ce que ledit conduit comporte un orifice d'entrée de faisceau laser (31) ayant la section minimale compatible avec le passage dudit faisceau laser (11) et un orifice de sortie de faisceau laser (29) en regard de ladite partie de surface (13), ledit conduit (20,25) ayant une forme profilée pour produire un écoulement stabilisé du gaz, ledit jet (21) de gaz protecteur étant fourni à une vitesse telle que le gaz ambiant existant est éliminé et que les effets physiques, dynamiques et chimiques du dit faisceau laser (11) sur ledit gaz sont minimisés, ledit gaz agissant ainsi sensiblement comme un gaz inerte.

2. Procédé suivant la revendication 1, caractérisé en ce que la vitesse dudit gaz est prédéterminée dans chaque partie dudit faisceau laser (11) pour minimiser les dits effets dudit faisceau laser (11) sur ledit gaz.

3. Procédé suivant la revendication 1 ou 2, caractérisé en ce que ledit jet de gaz (21) est fourni à une vitesse supersonique.

4. Procédé suivant la revendication 3, caractérisé en ce que ledit jet de gaz (21) est fourni sous la forme d'un certain nombre de courants élémentaires parallèles (22) dont la vitesse diminue en même temps que la hauteur dudit courant (22) par rapport à ladite surface (14) augmente.

5. Procédé suivant la revendication 4, caractérisé en ce que lesdits courants élémentaires sont fournis par des circuits parallèles indépendants complets, chaque circuit comprenant un réservoir respectif et étant conçu pour fournir un gaz ou un mélange de gaz ayant des propriétés différentes (poids moléculaire et structure, rapport de chaleur spécifique, etc.) et des conditions d'enthalpie et de stagnation différentes (température et pression totales).

6. Procédé suivant une quelconque des revendications précédentes, dans lequel ledit traitement consiste dans le soudage de deux pièces métalliques (18), caractérisé en ce que ledit jet (21) de gaz protecteur est fourni dans la même direction que celle dans laquelle lesdites pièces (18) se déplacent par rapport audit faisceau laser (11).

7. Dispositif pour la protection au moyen d'un gaz de pièces traitées au laser suivant le procédé indiqué dans les revendications précédentes, comprenant des moyens (12) pour diriger ledit faisceau laser (11)sur la dite partie de surface (13) ; ledit dispositif comprenant des moyens (24) pour stocker ledit gaz protecteur ; et des moyens (25) pour amener ledit gaz à partir desdits moyens de stockage (24) ; lesdits moyens d'amenée (25) comprennent au moins un conduit (26) défini par des parois solides et prévu pour fournir un jet (21) dudit gaz à la dite vitesse ; ledit conduit (26) étant placé de façon à diriger ledit jet (21) sur ladite surface (14) transversalement audit faisceau laser (11) ; caractérisé en ce que ledit conduit (20,25) comporte un orifice d'entrée de faisceau laser (31) ayant la section minimale compatible avec le passage dudit faisceau laser (11) et un orifice de sortie de faisceau laser (29) en regard de ladite partie de surface (13), ledit conduit (20,25) ayant une forme profilée pour obtenir un écoulement stabilisé du gaz, ledit jet (21) de gaz protecteur étant fourni à une vitesse telle que le gaz ambiant existant est éliminé et que les effets physiques, dynamiques et chimiques dudit faisceau laser (11) sur ledit gaz sont minimisés, ledit gaz agissant ainsi sensiblement comme un gaz inerte.

8. Dispositif suivant la revendication 7, caractérisé en ce que ledit conduit (25) présente une paroi inférieure (27) ayant une surface qui repose sur ladite surface (14) de ladite pièce (18) et une paroi supérieure (28) opposée à ladite paroi inférieure (27), ledit orifice de sortie de faisceau laser (29) étant formé dans ladite paroi inférieure (27), ledit orifice d'entrée de faisceau laser (31) étant formé dans ladite paroi supérieure (28).

9. Dispositif suivant la revendication 7 ou 8, caractérisé en ce que ledit orifice de sortie (29) a une section telle qu'il peut recevoir la matière liquéfiée de ladite pièce (18) soumise audit faisceau laser (11).

10. Dispositif suivant une quelconque des revendications précédentes 7 à 9, dans lequel ladite surface de travail (14) est sensiblement plane, caractérisé en ce que ledit conduit (25) présente une section sensiblement rectangulaire.

11. Dispositif suivant la revendication 10, caractérisé en ce que la largeur de ladite section rectangulaire est comprise entre 4 et 10 fois le diamètre du dit orifice de sortie (29), et la hauteur de ladite section rectangulaire est comprise entre 3 et 6 fois le diamètre de l'orifice de sortie (29).

12. Dispositif suivant une des revendications précédentes 7 à 11, caractérisé en ce que ledit conduit (25) comprend des tuyères (32) pour engendrer un jet de gaz supersonique (21).

13. Dispositif suivant la revendication 12, caractérisé en ce que lesdites tuyères (32) produisent un jet de gaz (21) consistant en une pluralité de courants élémentaires de gaz (22) dont la vitesse diminue au fur et à mesure que la hauteur par rapport à ladite partie de surface (13) augmente.

14. Dispositif suivant la revendication 13, caractérisé en ce que lesdits courants (22) produits par lesdites tuyères (32) ne sont pas séparées physiquement (tuyère multi-Mach).

15. Dispositif suivant la revendication 14, caractérisé en ce que lesdites tuyères (32) comprennent une pluralité de tuyères élémentaires (34) pour produire lesdits courants élémentaires de gaz (22).

16. Dispositif suivant la revendication 15, caractérisé en ce que chaquedite tuyère élémentaire (34) est alimentée par un circuit complet respectif connecté à un réservoir respectif (24).

17. Dispositif suivant une quelconque des revendications précédentes 7 à 16, caractérisé en ce que ledit conduit (25) présente une section plus grande en aval qu'immédiatement en amont desdits orifices (29,31).

18. Dispositif suivant une quelconque des revendications précédentes 8 à 17, caractérisé en ce que, en amont dudit orifice de sortie (29), ladite paroi inférieure (27) présente une rainure intérieure (40) pour diriger ledit gaz protecteur sur ladite partie de surface (13).

19. Dispositif suivant une quelconque des revendications précédentes 7 à 18, dans lequel ledit appareil (10) permet de souder deux pièces métalliques (18) le long de surfaces planes complémentaires respectives (17), et il comprend des moyens (23) pour déplacer lesdites pièces (18) par rapport audit appareil (10) ; caractérisé en ce que ledit conduit (25) est agencé de façon à amener ledit jet de gaz (21) sur ladite partie de surface (13) dans la même direction que celle desdits moyens (23) supportant lesdites pièces (18).

20. Dispositif suivant la revendication 19, caractérisé en ce que ledit conduit (25) comporte des moyens (37) pour diriger au moins une partie dudit jet (21) à partir de ladite partie de surface (13) le long d'un cordon (19) de ladite soudure (16).

21. Dispositif suivant la revendication 20, caractérisé en ce que lesdits moyens de direction comprennent une rainure (37) parallèle à l'axe dudit conduit (25), ladite rainure (37) étant formée dans ladite paroi inférieure (27) et s'étendant en aval dudit orifice de sortie (29) sur toute la longueur de ladite paroi inférieure (27).

22. Dispositif suivant la revendication 21, caractérisé en ce que, en amont dudit premier orifice (29), ladite paroi inférieure (27) présente un corps profilé (35) ayant son plus grand axe dans la direction dudit jet de gaz (21) et consistant en un demi-cône (35a) qui se poursuit par une partie semi-cylindrique (35b).

23. Dispositif suivant la revendication 22, caractérisé en de qu'il comprend un demi-cylindre creux (36) ayant son plus grand axe dans la direction d'écoulement dudit gaz, ledit demi-cylindre (36) formant une partie de ladite paroi inférieure (27) et s'étendant en aval dudit orifice de sortie (29).

Fig.1

Fig.2

Fig. 3

EP 0 621 817 B1

Fig. 4

Fig. 5

Fig. 6

Fig.7

Fig.8

Fig.9